# EUROPEAN PATENT APPLICATION

(11) **EP 2 879 332 A1**
(43) Date of publication of application: **03.06.2015**
(21) Application number: 14157860.9
(22) Date of filing: 05.03.2014
(51) Int. Cl.: H04L 12/28, H04L 29/08

(54) **Communication apparatus, communication relay apparatus and communication system**

(30) Priority: 30.10.2013 JP 2013225319
(71) Applicant: Toshiba Lighting & Technology Corporation, Yokosuka-shi Kanagawa 237-8510 (JP)
(72) Inventor: Terashima, Yoshiki, Kanagawa, 237-8510 (JP); Yamamoto, Takayuki, Kanagawa, 237-8510 (JP)
(74) Representative: Willquist, Sofia Ellinor

(57) **Abstract**

Provided are a communication apparatus, a communication relay apparatus, a communication method and a communication system, which prevent an apparatus from continuing to operate in an undesired operation state, if a communication failure occurs when remote control is performed.

The communication apparatus which is connectable with a server through a wired or wireless network and remotely operable by the server, includes a holding unit that holds information as to whether the communication apparatus is in a state of being remotely operated by a certain method; a determination unit that determines whether communication between the communication apparatus and the server is possible or not; and a control unit that causes the communication apparatus to be shifted to a predetermined operation state, when the holding unit holds information indicating a state of being remotely operated and the determination unit determines that communication between the communication apparatus and the server is disabled.

## Description

### CROSS-REFERENCE TO RELATED APPLICATIONS

This application is based upon and claims the benefit of priority from the prior Japanese Patent Application No.2013-225319, filed on October 30, 2013, the entire contents of which are incorporated herein by reference.

### FIELD

Embodiments described herein relate generally to a communication apparatus, a communication relay apparatus and a communication system.

### BACKGROUND

A system is known which transmits a control command through a network line from a server located outside a home and remotely controls network corresponding apparatuses within a home.

However, when a communication failure occurs, a user may not perform remote control outside the home, so that a communication apparatus located inside the home continues to operate in an undesired operation state.

For example, after the apparatus is activated, when a communication failure occurs in a network between the communication apparatus and a server, the user can not stop the apparatus. Then, the apparatus continues to operate, which may lead to unnecessary power consumption and a breakdown due to a long operation.

### BRIEF DESCRIPTION OF THE DRAWINGS

FIG. 1 is a configuration diagram of a system according to a first embodiment.
FIG. 2 is a block diagram showing a communication apparatus according to the first embodiment.
FIG. 3 shows examples of a waiting time corresponding to an operation state of the communication apparatus according to the first embodiment.
FIG. 4 is an operation flowchart of the communication apparatus according to the first embodiment.
FIG. 5 shows examples of an operation state to which the communication apparatus according to the first embodiment is to be shifted when communication with a server is disabled.
FIG. 6 is an operation sequence diagram at normal time between the communication apparatus according to the first embodiment and the server.
FIG. 7 is an operation sequence diagram when a communication failure occurs between the communication apparatus according to the first embodiment and the server.
FIG. 8 is a configuration diagram of a system according to a second embodiment.
FIG. 9 is a block diagram showing a communication apparatus according to the second embodiment.
FIG. 10 is a block diagram showing a HGW according to the second embodiment.
FIG. 11 is an operation flowchart of the communication apparatus according to the second embodiment.
FIG. 12 is an operation flowchart of HGW 4 according to the second embodiment.
FIG. 13 is a sequence diagram when a communication failure occurs between the communication apparatus according to the second embodiment and the HGW.
FIG. 14 is a sequence diagram when a communication failure occurs between the HGW according to the second embodiment and a server.
FIG. 15 is a sequence diagram when a communication failure occurs between a HGW according to a third embodiment and a server.

### DETAILED DESCRIPTION

In view of the above circumstances, the present embodiment provides a communication apparatus, a communication relay apparatus and a communication system, which prevent an apparatus located inside a home from continuing to operate in an undesired operation state when a communication failure occurs.

A communication apparatus of the present embodiment which is connectable with a server through a wired or wireless network and remotely operable by the server, includes a holding unit that holds information as to whether the communication apparatus is in a state of being remotely operated or not by a certain method; a determination unit that determines whether communication between the communication apparatus and the server is possible or not; and a control unit that causes the communication apparatus to be shifted to a predetermined operation state, when the holding unit holds information indicating a state of being remotely operated and the determination unit determines that communication between the communication apparatus and the server is disabled.

According to the present embodiment, provided are a communication apparatus, a communication relay apparatus, a communication system, and a communication method, which prevent an apparatus located inside a home from continuing to operate in an undesired operation state when a communication failure occurs.

The present embodiment provides a communication apparatus which is connectable with a server through a wired or wireless network and remotely operable by the server, the communication apparatus including a holding unit that holds information as to whether the communication apparatus is in a state of being remotely operated or not by a certain method; a determination unit that determines whether communication between the communication apparatus and the server is possible or not; and a control unit that causes the communication apparatus to be shifted to a predetermined operation state, when the holding unit holds information indicating a state of being remotely operated and the determination unit determines that communication between the communication apparatus and the server is disabled.

Further, provided is a communication relay apparatus which is connectable respectively with a server and a communication apparatus through a wired or wireless network and capable of remote control relaying between the server and the communication apparatus, the communication relay apparatus including a server communication determination unit that determines whether communication between the communication relay apparatus and the server is possible or not; and a determination result holding unit that holds a determination result of the server communication determination unit.

Furthermore, provided is a communication system including a communication apparatus which is connectable with a server through a wired or wireless network and remotely operable by the server, the communication apparatus including a holding unit that holds information as to whether the communication apparatus is in a state of being remotely operated or not by a certain method; a determination unit that determines whether communication between the communication apparatus and the server is possible or not; and a control unit that causes the communication apparatus to be shifted to a predetermined operation state, when the holding unit holds information indicating a state of being remotely operated and the determination unit determines that communication between the communication apparatus and the server is disabled.

Further, the present embodiment provides a communication method using the configuration described above.

In other words, provided is a communication method of a communication apparatus which is connectable with a server through a wired or wireless network and remotely operable by the server, the communication apparatus including a holding unit that holds information as to whether the communication apparatus is in a state of being remotely operated or not by a certain method; a determination unit that determines whether communication between the communication apparatus and the server is possible or not; and a control unit that causes the communication apparatus to be shifted to a predetermined operation state, when the holding unit holds information indicating a state of being remotely operated and the determination unit determines that communication between the communication apparatus and the server is disabled.

Hereinafter, embodiments will be described with reference to drawings.

### First embodiment

In a first embodiment, a communication system in which a communication apparatus 1 and a server 2 perform direct communication will be described.

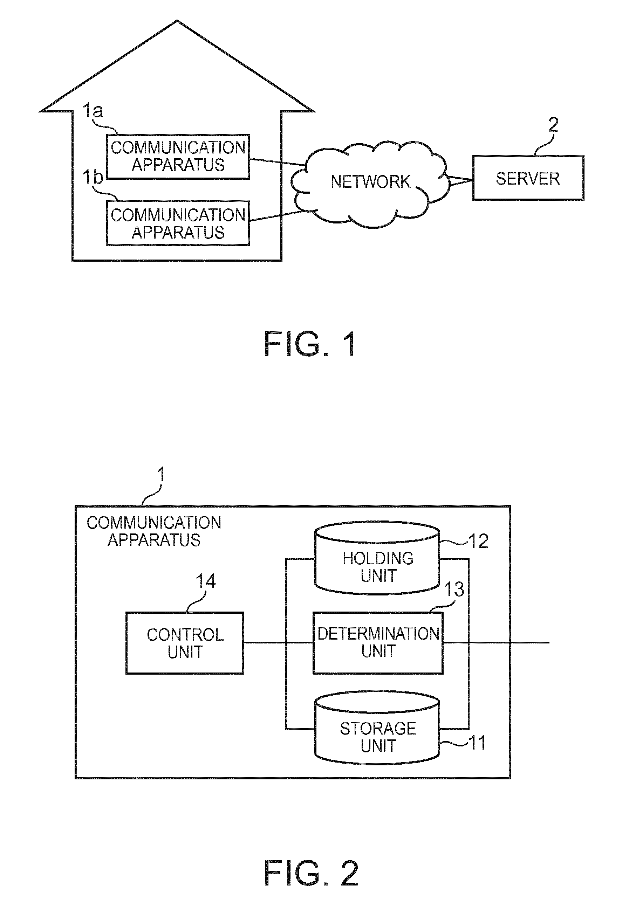

FIG. 1 is a block diagram showing a configuration of a system according to the first embodiment. The system of FIG. 1 is configured with the communication apparatuses 1 (1a, 1b) and the server 2 which are connected through a wired or wireless network. The communication apparatus 1 is a network home appliance such as an air conditioner conforming to, for example, ECHONET/ECHONET Lite and equipment such as a storage battery configured to be capable of being remotely controlled by communication. The communication apparatus 1 is configured to be capable of performing communication by using a communication infrastructure located inside a home. At least one or a plurality of communication apparatuses may be present. In addition, a general communication relay apparatus such as a router or a protocol converter may be interposed between the communication apparatus 1 and the server 2.

In the first embodiment, when the communication apparatus 1 is remotely operated at a destination outside a home, a user transmits an operation instruction to the server 2 from an operation terminal such as a mobile terminal, not shown, and the server 2 receives the operation instruction and transmits a control command to the communication apparatus 1. Herein, the control command is packets or protocols of a certain format including information corresponding to the operation instruction, and for example, an ECHONET/ECHONET Lite packet can be used therefor. Further, when any protocol converter is interposed, packets or protocols of two or more different formats may be used. In addition, although the control command received by the server 2 is subjected to a protocol conversion and then transmitted to the communication apparatus 1 in the present embodiment, the generation of the control packet is not limited to the time, the apparatuses, the configuration, and the like. For example, a converter may be interposed between the communication apparatus 1 and the server 2, or the communication apparatus 1 may include a conversion function. Further, after a control command for remote operation or a flag indicating a transmission source is given to the control packet, the control command may be transmitted to the communication apparatus 1.

The communication apparatus 1 includes, as a general function necessary for remote control, a control function to interpret a control command when the control command is received from the server 2, and to cause the communication apparatus 1 to be shifted to a predetermined operation state according to contents contained in the control command, and a function to request confirmation of the communication state to the server 2 at a predetermined time interval.

The server 2 includes, as a general function necessary for remote control, a function to receive an operation instruction from an operation terminal such as a mobile terminal, not shown, through a network, a function to generate a control command corresponding to the operation instruction, for example, an ECHONET/ECHONET Lite packet, and a function to transmit the control command to the communication apparatus 1 through a network. Further, the server 2 includes a function to transmit a response to a certain communication apparatus 1 when communication confirmation is requested from the certain communication apparatus 1.

FIG. 2 is a block diagram showing a configuration of the communication apparatus 1 according to the first embodiment.

The communication apparatus 1 includes a storage unit 11 that stores a predetermined operation state, a holding unit 12 that holds information as to whether the communication apparatus 1 is in a state of being remotely operated or not, by a certain method, a determination unit 13 that determines whether communication with the server 2 is possible or not, and a control unit 14 that causes the communication apparatus 1 to be shifted to a predetermined operation state, when the holding unit 12 holds information indicating a state of being remotely operated and the determination unit 13 determines that communication with the server 2 is disabled.

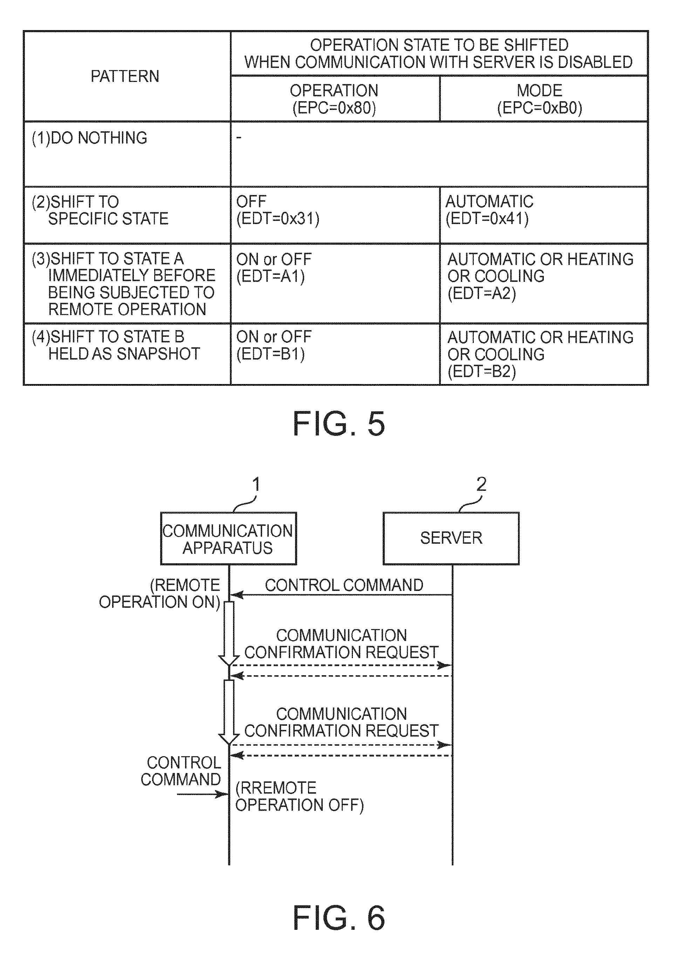

The storage unit 11 includes a function to store operation states of the communication apparatus 1, according to predetermined operation states or predetermined conditions which are given at the time of shipment of the communication apparatus 1. The stored operation states will be described later with reference to FIG. 5.

The holding unit 12 holds either information indicating a state of being remotely operated or information indicating a state of not being remotely operated. Here, the state of being remotely operated refers to, for example, a state in which the communication apparatus 1 receives a control command from the server 2 and is subjected to being controlled. Further, the state of not being remotely operated herein refers to, for example, a state in which the communication apparatus 1 is operated by a remote controller located inside a home or buttons in a main body of the communication apparatus 1. In the present embodiment, it is assumed that when a flag indicating remote operation, for example, distant control from outside a home, or a flag indicating that a transmission source is the server 2 is given to the control command which is received and executed by the communication apparatus 1, the holding unit 12 holds "remote operation ON" indicating a state of being remotely operated. It is assumed that when a flag indicating that the control command is not a remote operation command, or a flag indicating that a transmission source is the remote controller inside a home or the buttons in the main body of the communication apparatus 1 is given, the holding unit 12 holds "remote operation OFF" indicating the state of not being remotely operated.

The determination unit 13 includes a function to determine whether communication between the communication apparatus 1 and the server 2 is possible or not, and a function to decide a time interval for performing the determination, that is, a determination waiting time. Here, if the determination waiting time is set short, a communication failure is detected quickly, which leads to an increase in a communication load between the communication apparatus 1 and server 2 and an amount of power consumption due to amounts of additional processes. Therefore, it is preferable that the determination waiting time be a fixed value which is set for each apparatus or model, or a variable value according to an operation state of the communication apparatus 1. When the variable value is used, any configuration of the communication apparatus 1 may hold a correspondence table between the operation state and the determination waiting time. In addition, the correspondence table may be fixed and held at the shipment of the communication apparatus 1, or may be adjustable by a user setting or the like.

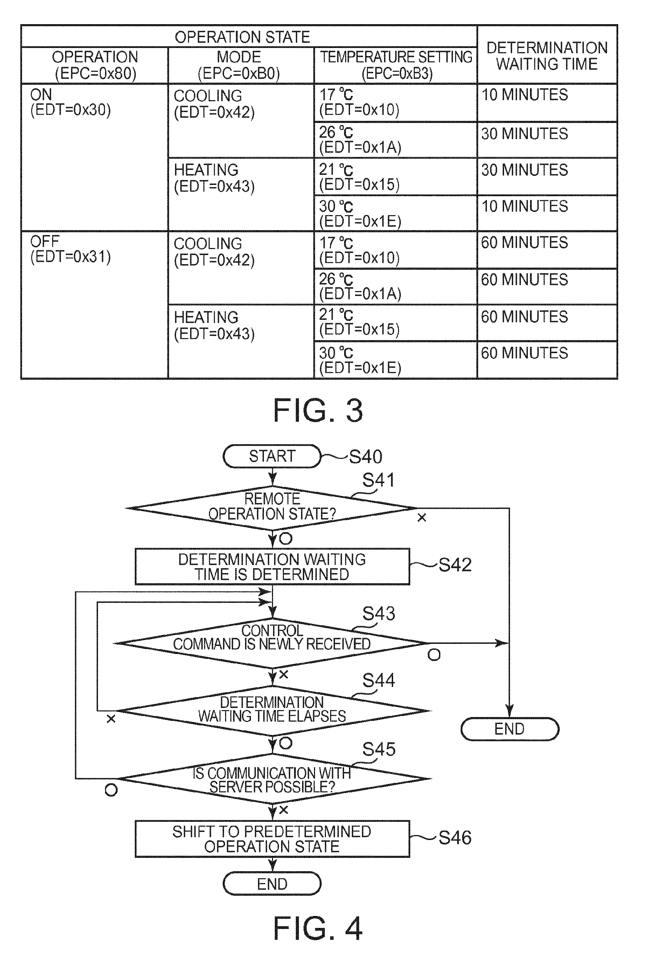

FIG. 3 shows an example of a table in which when the communication apparatus 1 is an air conditioner, the operation states of the air conditioner correspond to the determination waiting times. The operation state of a network home appliance conforming to ECHONET/ECHONET Lite can be represented as a combination of an ECHONET Property Code (EPC) indicating a state type and an ECHONET Data (EDT) indicating state contents. In the example in FIG. 3, it is possible to refer to the determination waiting time according to the combination of the EPC and the EDT.

When the remote operation of the communication apparatus 1 is disabled due to a communication failure, if the communication apparatus 1 continues to operate for a while in an operation state as it is, and it is less problematic, the determination waiting time is preferably set long. In contrast, when the remote operation is disabled, if the communication apparatus is in a state in which the user wants to detect the communication failure quickly and to change the operation state, the determination waiting time is preferably set short. For example, when the air conditioner is in an operation OFF state (EPC=0x80 and EDT=0x31), even if a communication failure occurs and remote operation is disabled, it is less problematic, so that the determination waiting time is set long, that is, 60 minutes. When the air conditioner is in an operation ON state (EPC=0x80 and EDT=0x30), a cooling (EPC=0xB0 and EDT=0x42) and a temperature setting is 26°C (EPC=0xB3 and EDT=0x1A), if a communication failure occurs and thus the remote operation is disabled, unnecessary power consumption due to continuous operation in the operation state as it is and the risk of an equipment breakdown due to continuous operation become more problematic as compared to the operation OFF state, so that the determination waiting time is set shorter, that is, 30 minutes. In a case of an operation state of operation ON (EPC=0x80 and EDT=0x30), a cooling (EPC=0xB0 and EDT=0x42) and a temperature setting being extremely low, that is, 17°C (EPC=0xB3 and EDT=0x10), if a communication failure occurs and remote operation is disabled, a continuous operation in the operation state as it is leads to unnecessary power consumption and the highest risk of an equipment breakdown due to continuous operation, so that the determination waiting time is set further shorter, that is, 10 minutes. In addition, the correspondence table may be fixed and held at the shipment of the communication apparatus 1, or may be adjustable by a user setting or the like.

The control unit 14 includes a function to interpret contents of a control command received from the server 2 or the remote controller located inside the home, and to control the communication apparatus 1 according to the contents, and a function to cause the communication apparatus 1 to be shifted to a predetermined operation state based on information of the storage unit 11, the holding unit 12, and the determination unit 13.

FIG. 4 is a flowchart showing an operation of the communication apparatus 1 according to the first embodiment. The flow of FIG. 4 is started when a control command is received and the control command is executed by the communication apparatus 1 (S40).

The communication apparatus 1 determines a remote operation state of the communication apparatus 1 which is held in the holding unit 12 (S41), and ends the flow when the holding unit 12 holds "remote operation OFF". On the other hand, when the holding unit 12 holds "remote operation ON", the determination unit 13 determines the determination waiting time of the communication state with the server 2 (S42). While the determination waiting time elapses, when the control command is received (S43), once a flow is ended, the flow is newly started (S40). When the determination waiting time elapses (S44), the determination unit 13 confirms whether communication with the server 2 is possible or not (S45). For example, a general confirmation method is used in which when a request for communication confirmation addressed to the server 2 is transmitted from the communication apparatus 1, if there is a response from the server 2 within a predetermined time, it is determined that communication with the server 2 is possible, and in contrast, if there is no response within a predetermined time, it is determined that communication is disabled.

When it is determined that communication between the communication apparatus 1 and the server 2 is possible (S45), the determination unit 13 returns to S43. When it is determined that communication with the server 2 is disabled (S45), the control unit 14 causes the communication apparatus 1 to be shifted to a predetermined operation state (S46).

In addition, although the flow is ended when not being remotely operated in S41 in the present embodiment, the communication apparatus 1 may continue to transmit regularly a confirmation request in order to confirm whether communication with the server 2 is possible or not, even though it is not remotely operated. In this case, when it is determined that communication with the server 2 is disabled, any operation such as repeating a communication confirmation after a predetermined time, or turning on a warning lamp of the communication apparatus may be performed.

FIG. 5 is examples of patterns to which the control unit 14 causes the operation state of the communication apparatus 1 to be shifted, in a state in which the communication apparatus 1 is remotely operated and when communication with the server 2 is disabled.

As described above, when the communication apparatus 1 is a network home appliance conforming to ECHONET/ECHONET Lite, since the operation state can be represented as a combination of the EPC indicating a state type and the EDT indicating state contents, it is assumed that the control unit 14 causes the operation state of the communication apparatus 1 to be shifted using the control command containing the EPC and the EDT.

In the present embodiment, it is preferable that an operation state to be shifted to when remote operation is disabled be set freely and easily (without an effort of the user individually setting EDT value of each EPC) by the user or an application.

FIG. 5 shows four examples including "do nothing", "shift to a specific state", "shift to a state immediately before being subjected to remote operation", and "shift to a state held as a snapshot" as patterns to which the control unit 14 causes the operation state of the communication apparatus 1 to be shifted.

First, in a case of a pattern "do nothing", values when the values of the EPC and the EDT of the communication apparatus 1 are remotely controlled are held as they are.

In a case of a pattern "shift to a specific state", the values of the EPC and the EDT of the communication apparatus 1 are changed to specific values held in the storage unit 11. For example, an operation (EPC=0x80) being OFF (EDT=0x30), and a mode (EPC=0xB0) being automatic (EDT=0x41) may be set. The values may be held at the shipment of the communication apparatus 1, or may be adjustable by a user. The pattern is applied to equipment and services in which operation states to be shifted to are clear, in view of safety and economic efficiency, when remote operation is disabled. For example, in a case of a storage battery which is configured to be capable of communicating with the communication apparatus 1 and in which charging and discharging can be remotely controlled, the pattern can be applied to a case where the storage battery is shifted to a waiting state when the remote operation is disabled during charging or discharging.

In a case of a pattern of "shift to a state immediately before being subjected to remote operation", the storage unit 11 stores values of EPC and EDT corresponding to a state in which the communication apparatus 1 is not remotely operated, and a state of the communication apparatus 1 when a control command is received from the server 2, that is an operation state immediately before being subjected to remote operation, and when communication between the communication apparatus 1 and the server 2 is disabled, the EPC and the EDT of the communication apparatus 1 are changed to values held in the storage unit 11. For example, this pattern is applied to a service in which returning to an original operation state is desirable when the remote operation is disabled, such as a situation in which an air conditioner while performing cooling during summer is temporarily stopped by remote operation.

In a case of a pattern of "shift to a state held as a snapshot", when communication between the communication apparatus 1 and the server 2 is disabled, the communication apparatus 1 is shifted to a certain state that is set by the user. Here, the certain state that is set by the user is a state of being controlled by receiving a main body operation by the user, or a control command received from a remote controller located inside a home, a Home Gateway (HGW), or a Home Energy Management System (HEMS) controller, and values of EPC and EDT corresponding to an operation state of the communication apparatus 1 at this time are stored in the storage unit 11 and set as a snapshot. Next, when communication between the communication apparatus 1 and the server 2 is disabled, the EPC and the EDT of the communication apparatus 1 are changed to values stored in the storage unit 11. This pattern enables storing of a snapshot of an air conditioner operation state when the user feels comfortable while the user uses the air conditioner as usual. A plurality of snapshots may be held, and be switched between by a certain setting.

FIG. 6 is an operation sequence diagram showing an operation of a communication system according to the first embodiment, at normal time.

If a control command is received from the server 2 through a predetermined network, the communication apparatus 1 is switched to a remote operation state, holds information indicating "remote operation ON" in the holding unit 12, and is shifted to a predetermined operation state according to the contents of the control command. Next, the determination waiting time is determined according to the operation state, and a communication state with the server 2 is determined at every determination waiting time point.

If an operation is performed by a remote controller located inside a home, the main body of the communication apparatus, or the like, the holding unit 12 holds information indicating "remote operation OFF", switches an operation state to a home operation, and stops communication confirmation.

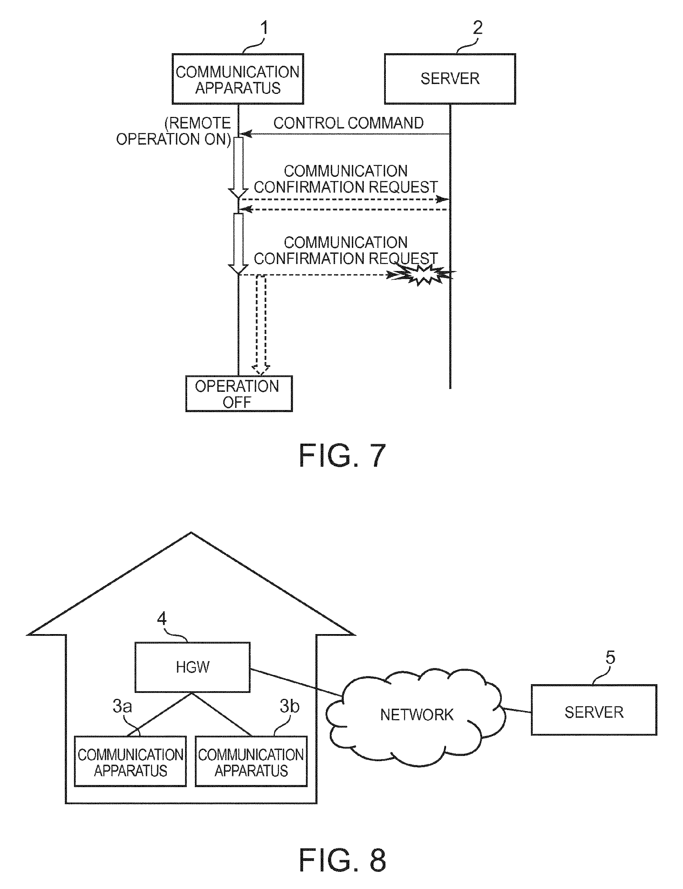

FIG. 7 is a sequence diagram showing an operation of a communication system according to the first embodiment when a communication failure occurs.

When the holding unit 12 holds "remote operation ON", it is assumed that a communication failure occurs in a network between the communication apparatus 1 and the server 2. The determination unit 13 determines that a communication failure occurs between the communication apparatus 1 and the server 2, by a predetermined determination method which is performed at every determination waiting time point. At this time, since the communication apparatus 1 is in a remote operation state and communication with the server 2 is disabled, the control unit 14 causes the communication apparatus 1 to be shifted to a predetermined operation state according to a shift pattern which is set.

For example, when the communication apparatus 1 is an air conditioner, and a first control command which starts remote control includes "EPC=0x80 and EDT=0x30; EPC=0xB0 and EDT=0x42; EPC=0xB3 and EDT=0x10", the air conditioner operates in "operation ON, and cooling 17°C", and determines the determination waiting time as 10 minutes by referring to the determination waiting time of FIG. 3.

Subsequently, the air conditioner makes a request for a communication state confirmation addressed to the server 2 for confirming a communication state every 10 minutes, and the server 2 transmits a response addressed to the air conditioner whenever a confirmation request is received. When a response is not received from the server 2 for a predetermined time after the air conditioner transmits the communication confirmation, the air conditioner determines that a communication failure occurs in a network with the server 2, and the air conditioner shifts an operation state to a predetermined operation state, for example, as shown in FIG. 5, "EPC=0x80 and EDT=0x31" indicating "operation OFF".

### Effect of first embodiment

According to the first embodiment, it is possible to prevent an apparatus from continuing to operate in an undesired operation state when a communication failure occurs.

For example, immediately after the air conditioner is activated by remote operation, when a communication failure occurs in a network between the air conditioner and the server, the air conditioner is automatically stopped, and even though the user cannot perform remote operation, the air conditioner does not continue to operate still in the operation state in a cooling mode. Therefore, suppressing unnecessary power consumption and an equipment breakdown due to a continuous operation can be expected. Otherwise, when a communication failure occurs after the discharge of the storage battery is instructed by the remote control, suppressing a problem that since the storage battery continues to be discharged, the amount of storage is not enough when the power is needed can be expected.

Further, since a waiting time according to an operation state of the communication apparatus 1 is used as in FIG. 3, it is possible to accelerate the detection of the communication failure as necessary, while suppressing additional processes of the communication apparatus 1 and the server.

### Second embodiment

In a second embodiment, a communication system in which a relay apparatus is interposed between a communication apparatus 3 and a server 5 will be described.

FIG. 8 is a block diagram showing a configuration of a system according to the second embodiment. The system of FIG. 8 is configured with the communication apparatuses 3 (3a, 3b), a Home Gateway (HGW) 4 as a relay apparatus which is connected to the communication apparatus 3 through a wired or wireless home network, and the server 5 which is connected with the HGW 4 through a wired or wireless network. The communication apparatus 3 is a network home appliance such as an air conditioner conforming to, for example, ECHONET/ECHONET Lite and equipment such as a storage battery configured to be capable of being remotely controlled by communication. The communication apparatus 3 is configured to be capable of performing communication by communication infrastructure located inside a home. At least one or a plurality of communication apparatuses may be present. In addition, a general communication relay apparatus such as a router or a protocol converter may be interposed between the HGW 4 and the server 5 or between the communication apparatus 3 and the HGW 4.

In the second embodiment, when the communication apparatus 3 is remotely operated at a destination place, a user transmits an operation instruction to the server 5 from an operation terminal such as a mobile terminal, not shown, and the server 5 receives the operation instruction and transmits a control command to the HGW 4. The HGW 4 interprets the control command and transmits the control command to an appropriate communication apparatus 3. Herein, the control command is packets or protocols of a certain format including information corresponding to the operation instruction, and for example, an ECHONET/ECHONET Lite packet can be used therefor. Further, when any protocol converter is interposed, packets or protocols of two or more different formats may be used. In addition, although the control command received by the server 5 is subjected to a protocol conversion and then transmitted to the HGW 4 in the present embodiment, the generation of the control packet is not limited to the time, the apparatuses, the configuration, and the like. For example, the communication apparatus 3 or the HGW 4 may include a conversion function, and a converter may be interposed between the communication apparatus 3 and the HGW 4 or between the HGW 4 and the server 5. Further, after a control command for remote operation or a flag indicating a transmission source is given to the control packet, the control command may be transmitted to the communication apparatus 3.

The communication apparatus 3 includes as general functions necessary for remote control, a control function to interpret a control command when the control command is received from the HGW 4, and to change the communication apparatus 3 to a predetermined operation state according to the contents contained in the control command, and a function to make a request for a confirmation result of a communication state to the HGW 4 at every predetermined time point.

The HGW 4 includes a function to receive a control command from the server 5, and a function to transmit the control command to an appropriate communication apparatus 3. Further, the HGW 4 includes a function to make a request for confirmation of a communication state to the server 5 at every predetermined time point, and a function to transmit the result to the communication apparatus 3 when a result of the confirmation of the communication state is requested from a certain communication apparatus 3.

The server 5 includes, as a general function necessary for remote control, a function to receive an operation instruction from an operation terminal such as a mobile terminal, not shown, through a network, a function to generate a control command corresponding to the operation instruction, for example, an ECHONET/ECHONET Lite packet, and a function to transmit the control command to the HGW 4 through a network. Further, the server 5 includes a function, when communication state confirmation is requested from the HGW 4, to transmit a response to the HGW 4.

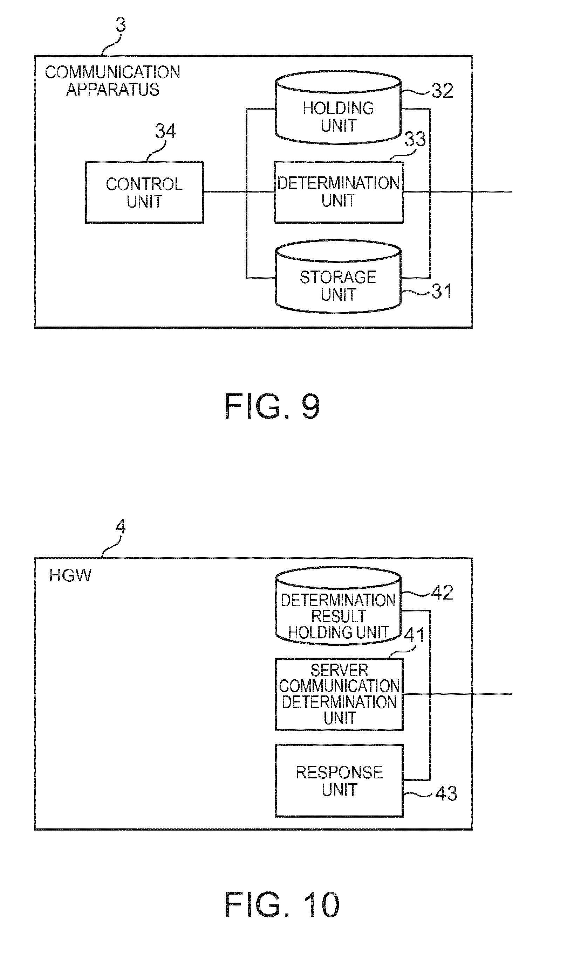

FIG. 9 is a block diagram showing a configuration of a communication apparatus 3 according to the second embodiment.

The communication apparatus 3 includes a storage unit 31 that stores a predetermined operation state, a holding unit 32 that holds information as to whether the communication apparatus 3 is in a state of being remotely operated or not, by a certain method, a determination unit 33 that determines whether communication with the server 5 is possible or not, and a control unit 34 that causes the communication apparatus 3 to be shifted to a predetermined operation state, when the holding unit 32 holds information indicating a state of being remotely operated and the determination unit 33 determines that communication with the server 5 is disabled.

The holding unit 32 holds either information indicating a state of being remotely operated or information indicating a state of not being remotely operated. Here, the state of being remotely operated refers to, for example, a state in which the communication apparatus 3 receives a control command from the server 5 and is subjected to being controlled. Further, the state of not being remotely operated herein refers to, for example, a state in which the communication apparatus 3 is operated by a remote controller located inside a home, buttons in a main body of the communication apparatus 3, or the like. In the present embodiment, it is assumed that when a flag indicating remote operation, for example, distant control from outside a home, or a flag indicating that a transmission source is the server 5 is given to the control command which is received and executed by the communication apparatus 3, the holding unit 32 holds "remote operation ON" indicating a state of being remotely operated. It is assumed that when a flag indicating that the control command is not a remote operation command or a flag indicating that a transmission source is the remote controller or the buttons in a main body of the communication apparatus 3 is given, the holding unit 32 holds "remote operation OFF" indicating the state of not being remotely operated.

The determination unit 33 includes a function to determine whether communication between the communication apparatus 3 and the HGW 4 and between the HGW 4 and the server 5 are possible or not, and a function to decide a time interval for performing the determination, that is, a determination waiting time. Therefore, it is preferable that the determination waiting time be a fixed value which is set for each apparatus or model, or a variable value according to an operation state of the communication apparatus 3. When the variable value is used, any configuration of the communication apparatus 3 may hold a correspondence table between the operation state and the determination waiting time. In addition, the correspondence table may be fixed and held at the shipment of the communication apparatus 3, or may be adjustable by a user setting or the like.

The control unit 34 includes a function to interpret contents of a control command received from the HGW 4 or the remote controller located inside the home, and to control the communication apparatus 3 according to the contents, and a function to cause the communication apparatus 3 to be shifted to a predetermined operation state based on information of the storage unit 31, the holding unit 32, and the determination unit 33.

FIG. 10 is a block diagram showing a configuration of a HGW 4 according to the second embodiment.

The HGW 4 includes a server communication determination unit 41 that determines whether communication with the server 5 is possible or not, a determination result holding unit 42 that holds the determination result, and a response unit 43 that performs response based on the determination result when the confirmation of the communication state is requested from the communication apparatus.

The server communication determination unit 41 includes a function to determine whether communication with the HGW 4 and the server 5 is possible or not, and a function to decide a time interval for performing the determination, that is, a determination waiting time. The determination waiting time may be fixed and held at the shipment of the HGW 4, or may be adjustable by a user setting or the like. Further, the determination may be continuously performed after the HGW 4 is activated, or may be performed, according to the mediation of the remote control command. In the present embodiment, it is assumed that a control command is received to which a flag indicating remote operation or a flag indicating that a transmission source is the server 5 is given, and the control command is transmitted to a certain communication apparatus 3.

The determination result holding unit 42 holds either information indicating that communication with the server 5 is possible or information indicating that communication with the server 5 is disabled. In the present embodiment, it is assumed that information indicating "server communication possible" is held when the communication with the server 5 is possible, and information indicating "server communication disabled" is held when the communication with the server 5 is disabled.

The response unit 43 includes a function to perform response based on the determination result when the confirmation of the communication state is requested from the communication apparatus 3. For example, if the request for the communication result is received from a certain communication apparatus 3, when the determination result holding unit 42 holds information indicating "server communication possible", the response containing information indicating "server communication possible" is transmitted to the communication apparatus 3. In contrast, when the request for the communication result is received from a certain communication apparatus 3, if the determination result holding unit 42 holds information indicating "server communication disabled", the response containing information indicating "server communication disabled" is transmitted to the communication apparatus 3.

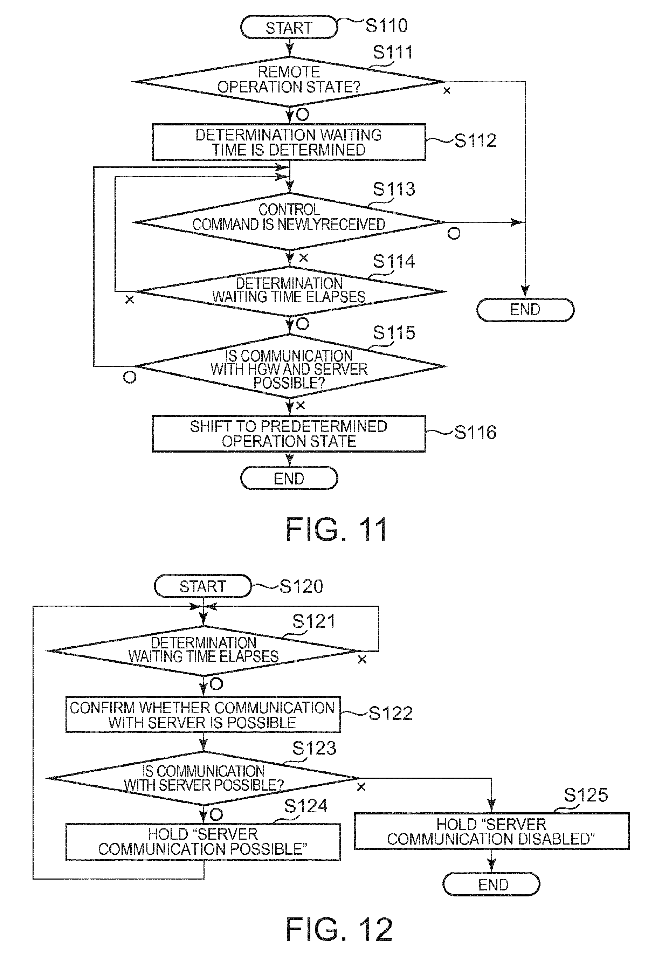

FIGS. 11 and 12 are flowcharts of the communication apparatus 3 and the HGW 4 according to the second embodiment.

The flow of FIG. 11 is started when a control command is received and the control command is executed by the communication apparatus 3 (S110).

The communication apparatus 3 determines a remote operation state of the communication apparatus 3 which is held in the holding unit 32 (S111), and ends the flow when the holding unit 32 holds "remote operation OFF". On the other hand, when the holding unit 32 holds "remote operation ON", the determination unit 33 determines the determination waiting time of the state of communication with the HGW 4 and the server 5 (S112). While the determination waiting time elapses, when the control command is received (S113), once a flow is ended, the flow is newly started (S110). When the determination waiting time elapses (S114), the determination unit 33 confirms whether communication with the HGW 4 and the server 5 is possible or not (S115).

For example, with respect to the confirmation, when a request for communication confirmation addressed to the HGW 4 is transmitted from the communication apparatus 3, if there is no response from the HGW 4 within a predetermined time, it is determined that communication with the HGW 4 is disabled, and in contrast, if there is a response within a predetermined time, it is determined that communication with the HGW 4 is possible. Further, when the response containing information indicating "server communication disabled" is transmitted from the HGW 4, it is determined that communication with the server 5 is disabled.

When it is determined that communication between the communication apparatus 3 and the server 5 is possible (S115), the determination unit 33 returns to a decision procedure of confirmation waiting time. When it is determined that communication with the server 5 is disabled (S115), the control unit 34 causes the communication apparatus 3 to be shifted to a predetermined operation state (S116).

In addition, although the flow is ended when not being remotely operated in S111 in the present embodiment, the communication apparatus 3 may continue to transmit regularly a confirmation request in order to confirm whether communication with the HGW 4 and the server 5 is possible or not, even though it is not remotely operated. In this case, when it is determined that communication with the HGW 4 or the server 5 is disabled, any operation such as repeating a communication confirmation after a predetermined time, or turning on a warning lamp of the communication apparatus may be performed.

When a control command is received from the server 5 and the control command is transmitted to the communication apparatus 3, the flow of FIG. 12 is started (S120). Otherwise, the flow may be started after the HGW 4 is activated, and may return to S120 after execution of S125.

Whenever a predetermined determination waiting time elapses (S121), the server communication determination unit 41 of the HGW 4 confirms whether communication with the server 5 is possible or not (S122). For example, the request for the communication confirmation is transmitted from the HGW 4 to the server 5, if there is a response from the server 5 within a predetermined time, it is confirmed that communication with the server 5 is possible, and in contrast, if there is no response from the server 5 within a predetermined time, it is confirmed that communication with the server 5 is disabled. When there is a response from the server 5, the determination result holding unit 42 holds information indicating "server communication possible" (S124), and returns to S121. On the other hand, if there is no response from the server 5 within a predetermined time, the determination result holding unit 42 holds information indicating "server communication disabled" (S125), and ends the flow.

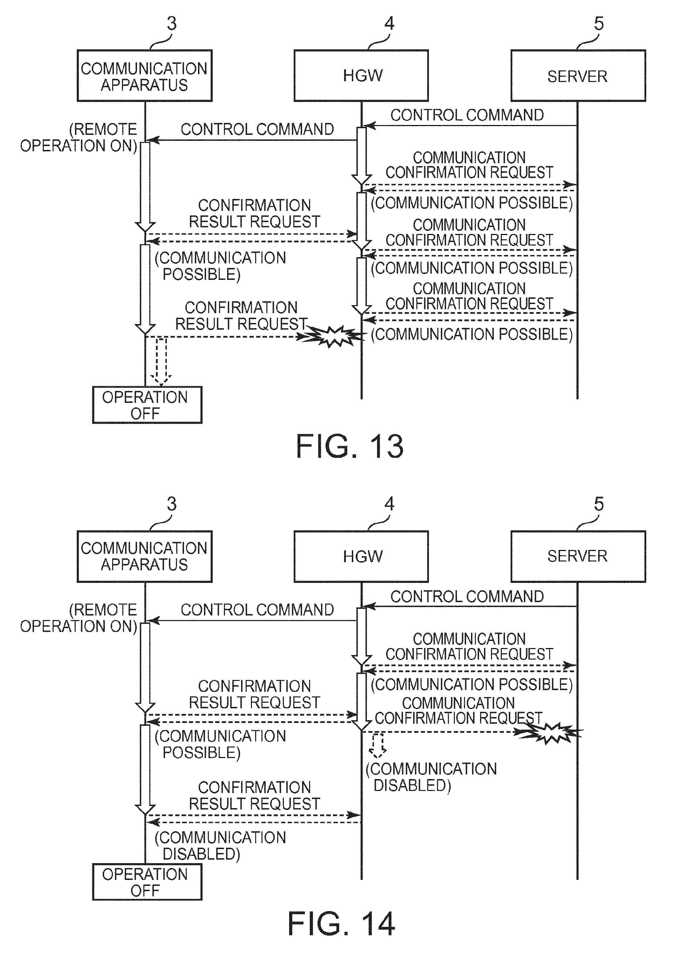

FIGS. 13 and 14 are operation sequence diagrams of a communication system when communication failures occur between the communication apparatus 3 and the HGW 4, or the HGW 4 and the server 5, according to the second embodiment. In either case, since the communication apparatus 3 is in a state of not being remotely operated through the HGW 4 from the server 5, it is desirable to cause the communication apparatus 3 to be automatically shifted to a predetermined operation state.

FIG. 13 is a sequence diagram when a communication failure occurs between the communication apparatus 3 and the HGW 4.

First, the server 5 transmits a control command to the communication apparatus 3 through the HGW 4. If the control command is received, the communication apparatus 3 interprets the control command to perform the shift of the operation state, and holds "remote operation ON" in the holding unit 32.

The HGW 4 makes a request for the communication confirmation to the server 5 at every predetermined determination waiting time point according to the mediation of the control command, and holds the result. For example, after request for the communication confirmation is made to the server 5, if a response is received within a predetermined time, it is determined that communication with the server 5 is possible by the server communication determination unit 41, and the result of "server communication possible" is held in the determination result holding unit 42.

If the holding unit 32 holds "remote operation ON", the communication apparatus 3 makes a request to the HGW 4 for a result of communication confirmation between the HGW 4 and the server 5 at every predetermined determination waiting time point. In addition, the communication confirmation request that the HGW 4 makes to the server 5 and the communication confirmation result request that the communication apparatus 3 makes to the HGW 4 may be performed separately. In other words, transmission intervals of respective requests may be set differently.

When the determination result holding unit 42 holds information indicating "server communication possible", if a confirmation result is requested from the communication apparatus 3, the HGW 4 returns a response containing information indicating "server communication possible" from the response unit 43. Here, when a communication failure occurs between the communication apparatus 3 and the HGW 4, the communication apparatus 3 cannot receive a response from the HGW 4.

Then, since the determination unit 33 holds "remote operation ON" in the holding unit 32 and a response can not be received from the HGW 4 within a predetermined time after the result request is transmitted, it is determined that communication with the HGW 4 is disabled, that is, communication with the server is disabled, and thus the communication apparatus 3 is shifted to a predetermined operation state, for example, "operation OFF" by the control unit 34.

FIG. 14 is a sequence diagram when a communication failure occurs between the HGW 4 and the server 5.

The operations of the communication apparatus 3, the HGW 4 and the server 5 before a communication failure occurs are the same as in the description of FIG. 13, and thus the description thereof will be omitted.

When communication with the server 5 is disabled, for example, a response is not received within a predetermined time after a request for communication confirmation is made to the server 5, it is determined that the communication with the server 5 is disabled by the server communication determination unit 41, and the HGW 4 holds a result indicating "server communication disabled" in the determination result holding unit 42. At this time, if a confirmation result is requested from the communication apparatus 3, the response unit 43 returns a response including information indicating "server communication disabled".

Then, since the determination unit 33 holds "remote operation ON" in the holding unit 32 and a response indicating "server communication disabled" is received, it is determined that communication with the server is disabled, and thus the communication apparatus 3 is shifted to a predetermined operation state, for example, "operation OFF" by the control unit 34.

### Effect of second embodiment

According to the second embodiment, when remote control through HGW is performed, if a communication failure occurs between the communication apparatus and the HGW, or in a network between the HGW and the server, it is possible to prevent an apparatus from continuing to operate in an undesired operation state.

Such a system through the HGW includes a merit of managing aggregately a communication function with the server and a security function. Further, since it is possible to specify whether a communication failure occurs between the communication apparatus 3 and the HGW 4, or between the HGW 4 and the server 5, this contributes to speeding up restoration work.

### Third embodiment

In the third embodiment, a communication system is described in which a relay apparatus is interposed between the communication apparatus 3 and the server 5, and which does not respond to a communication confirmation result request from the communication apparatus 3 when communication between the HGW 4 as the relay apparatus and the server 5 is disabled. In addition, since an entire system diagram of the third embodiment and configuration figures of the communication apparatus 3 and the HGW 4 are the same as in the second embodiment, the same components are denoted by the same reference numerals and thus a detailed description thereof will be omitted.

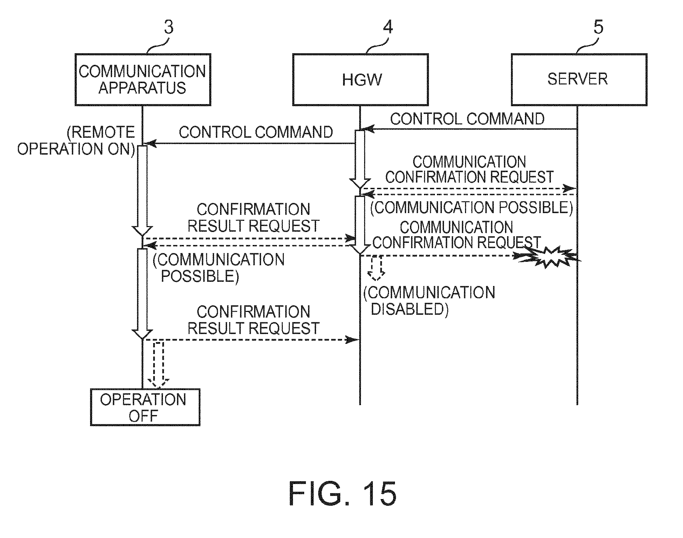

FIG. 15 is a sequence diagram when a communication failure occurs between the HGW 4 and the server 5.

First, the server 5 transmits a control command to the communication apparatus 3 through the HGW 4. If the control command is received, the communication apparatus 3 interprets the control command and performs the shift of the operation state, and holds "remote operation ON" in the holding unit 32.

The HGW 4 makes a request for communication confirmation to the server 5 at every predetermined determination waiting time point, according to the mediation of the control command, and holds the result. For example, if a response is received within a predetermined time after request for the communication confirmation is made to the server 5, it is determined that communication with the server 5 is possible by the server communication determination unit 41, and a result indicating "server communication possible" is held in the determination result holding unit 42.

If the holding unit 32 holds "remote operation ON", the communication apparatus 3 makes a request for the result of the communication confirmation with the HGW 4 and the server 5, to the HGW 4, at every predetermined determination waiting time point. In addition, the communication confirmation request that the HGW 4 makes to the server 5 and the communication confirmation result request that the communication apparatus 3 makes to the HGW 4 may be performed separately. In other words, transmission intervals of respective requests may be set differently.

When communication with the server 5 is disabled, for example, a response is not received within a predetermined time after request for communication confirmation is made to the server 5, it is determined that the communication with the server 5 is disabled by the server communication determination unit 41, and the HGW 4 holds a result indicating "server communication disabled" in the determination result holding unit 42. At this time, even if a confirmation result is requested from the communication apparatus 3, the response unit 43 does not transmit a response.

Then, since the determination unit 33 holds "remote operation ON" in the holding unit 32 and a response can not be received from the HGW 4 within a predetermined time after the result request is transmitted, it is determined that communication with the HGW 4 is disabled, that is, communication with the server is disabled, and thus the communication apparatus 3 is shifted to a predetermined operation state, for example, "operation OFF" by the control unit 34.

### Effect of third embodiment

According to the third embodiment, the communication apparatus 3 determines that communication with the server 5 is possible if a response is received from the HGW 4, and communication with the server 5 is disabled if a response is not received from the HGW 4. Therefore, since it is not necessary for the HGW 4 to perform two types of responses of "communication with server is disabled" and "communication with server is possible" and it is not necessary also for the communication apparatus 3 to interpret response contents, it is possible to reduce a communication and information processing load.

In addition, the exemplary embodiment is not limited to the embodiments as they are, and it is possible to modify and specify the components in the implementation stage without departing from the spirit of the exemplary embodiment.

For example, when a communication failure occurs, the server no longer receives an inquiry from the communication apparatus or the HGW. At this time, the server may notify the user by a certain method of the fact that communication with the communication apparatus is interrupted or a predetermined operation state to which the communication apparatus is automatically shifted. Further, in the case of the communication system through the HGW, the HGW may store information about the communication apparatus while being remotely operated, and when a communication failure occurs between the HGW and the server, the HGW may immediately notify the communication apparatus while being remotely operated of that fact, for example, may immediately transmit a predetermined control command indicating "operation OFF".

In addition, an operation state to which a communication apparatus is to be shifted when a communication failure occurs may be prepared by a manufacturer of the communication apparatus and held in a certain external server, and the operation state may be downloaded through communication. Alternatively, the stored operation state may be transferred (uploaded and downloaded by direct communication or through an external server) to another communication apparatus of the same type through communication. This makes it possible to allow the operation state to which the communication apparatus is to be shifted when remote operation is disabled to be shared or set for each apparatus, service or user.

Further, various exemplary embodiments can be made by appropriately combining the plurality of components disclosed in the above embodiments. For example, some components may be removed from the all components shown in the embodiments, or components in the different embodiments may be appropriately combined.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the spirit of the inventions. The accompanying claims and their equivalents are intended to cover such forms or modifications as would fall within the scope and spirit of the inventions.

## Claims

1. A communication apparatus which is connectable with a server through a wired or wireless network and remotely operable by the server, the communication apparatus comprising:
a holding unit that holds information as to whether the communication apparatus is in a state of being remotely operated or not;
a determination unit that determines whether communication between the communication apparatus and the server is possible or not; and
a control unit that causes the communication apparatus to be shifted to a predetermined operation state, when the holding unit holds information indicating a state of being remotely operated and the determination unit determines that communication between the communication apparatus and the server is disabled.

2. The apparatus according to claim 1,
wherein the determination unit includes a function to check whether communication with the server is possible or not, at a predetermined time interval;

3. A communication relay apparatus which is connectable respectively with a server and a communication apparatus through a wired or wireless network and capable of remote control relaying between the server and the communication apparatus, the communication relay apparatus comprising:
a server communication determination unit that determines whether communication between the communication relay apparatus and the server is possible or not; and
a determination result holding unit that holds a determination result of the server communication determination unit.

4. The apparatus according to claim 3,
wherein the server communication determination unit includes a function to check whether communication with the server is possible or not, at a predetermined time interval.

5. A communication system comprising:
a server;
a communication relay apparatus being capable of communicating with the server; and
a communication apparatus that is shifted to a predetermined operation state, when the communication apparatus is in a state of being remotely operated by the server through the communication relay apparatus and communication with the server is disabled.

6. The system according to claim 5,
wherein the communication system confirms whether communication between the communication apparatus and the server is possible or not, at a predetermined time interval.

7. The system according to claim 5 or 6,
wherein the communication apparatus checks whether communication with the communication relay apparatus is possible or not, at a predetermined time interval.

8. The system according to any one of claims 5 to 7,
wherein the communication relay apparatus checks whether communication with the server is possible or not, at a predetermined time interval.

9. The system according to claim 5,
wherein the communication relay apparatus checks whether communication between the communication relay apparatus and the server is possible or not, at a predetermined time interval and holds a result of the checking, and
wherein the communication apparatus inquires of the communication relay apparatus whether communication between the communication relay apparatus and the server is possible or not, at a predetermined time interval.

10. The system according to claim 9,
wherein the communication apparatus checks whether communication between the communication apparatus and the communication relay apparatus is possible or not, at a predetermined time interval.
